Europäisches Patentamt

European Patent Office

Office européen des brevets

(11) Veröffentlichungsnummer: **0 022 129**

A1

## (12) EUROPÄISCHE PATENTANMELDUNG

(21) Anmeldenummer: 80890070.8

(22) Anmeldetag: 20.06.80

(51) Int. Cl.³: **H 02 K 31/00**

(30) Priorität: 21.06.79 AT 4392 79

(43) Veröffentlichungstag der Anmeldung:
07.01.81 Patentblatt 81 1

(84) Benannte Vertragsstaaten:
AT BE CH DE FR GB IT LI LU NL SE

(71) Anmelder: Wittmann, Franz
Favoritenstrasse 169 13
A-1100 Wien(AT)

(72) Erfinder: Wittmann, Franz
Favoritenstrasse 169 13
A-1100 Wien(AT)

(74) Vertreter: Krause, Ernst, Dipl.-Ing. et al,
Dipl.- Ing. Krause Ernst Dipl. Ing. Casati Wilhelm
Patentanwälte Amerlingstrasse 8
A-1061 Wien(AT)

(54) **Unipolarmaschine.**

(57) Der Anker (2,2) der Unipolarmaschine ist scheibenförmig ausgebildet und unter Bildung beiderseitiger Luftspalte zwischen scheibenförmigen Statorteilen (1,1') angeordnet. Die Statorteile (1,1') können ankerseitig je eine ringförmige Ausnehmung (10) für eine ringförmige Erregerwicklung (6) aufweisen. Die einander gegenüberliegenden Polflächen der Statorteile (1,1') sind gleichpolig magnetisiert. Der Anker (2,2') besteht aus zwei parallelen, durch einen Luftspalt oder eine nichtmagnetisierbare Zwischenlage (11) getrennte Scheiben. Die Scheiben tragen wenigstens eine gemeinsame durchlaufende Wicklung (3) mit im Achsialschnitt einen achtförmigen Verlauf aufweisenden Windungen. Es können jedoch auch zwei in Radialrichtung hintereinander angeordnete Teilwicklungen vorgesehen sein, die entweder entgegengesetzt gewickelt oder entgegengesetzt zusammengeschaltet sind. Die Enden der Wicklungsanordnung sind zu auf der Ankerwelle (4) montierten Schleifringen (8) herausgeführt.

EP 0 022 129 A1

Croydon Printing Company Ltd.

BAD ORIGINAL

## Unipolarmaschine

Die Erfindung betrifft eine Unipolarmaschine mit einem scheibenförmigen Anker, der unter Bildung beiderseitiger Luftspalte zwischen scheibenförmigen Statorteilen angeordnet ist, die ankerseitig je eine ringförmige Ausnehmung aufweisen, in der gegebenenfalls je eine ringförmige Erregerwicklung untergebracht ist.

Unipolarmaschinen der vorstehend beschriebenen Art sind bekannt und beispielsweise in der US-PS 1 271 061 beschrieben. Diese Maschine hat den Nachteil, daß nicht nur auf der Ankerwelle, sondern auch am äußeren Umfang des scheibenförmigen Ankers Schleifkontakte vorhanden sein müssen, die infolge des großen Umfanges der Ankerscheibe eine hohe Relativgeschwindigkeit zwischen ihren beiden kontaktierenden Teilen erreichen. Dies führt zu einer raschen Abnützung und zu Störungen beim Stromübertritt vom beweglichen in den feststehenden Teil, bzw. bedarf es zur Erzielung eines einigermaßen klaglosen Stromüberganges eines höheren Aufwandes an Konstruktionselementen.

Aus der FR-PS 374 749 ist ebenfalls eine Unipolarmaschine bekannt geworden, deren Durchmesser größer ist als ihre achsiale Breite. Bei dieser Maschine ist jedoch kein scheibenförmiger Anker vorgesehen, sondern ein sternförmiger und auch der Stator ist mit ausgeprägten Polen versehen. Die bekannte Maschine benötigt zwar nur zwei Schleifringe auf der Ankerwelle, ihre Bauform ist jedoch kompliziert und ebenso auch die Wicklungen, die räumlich in mehreren Ebenen angeordnet sind.

Die Erfindung hat sich das Ziel gesetzt, eine Unipolarmaschine der eingangs beschriebenen Art zu schaffen, die mit nur zwei Schleifringen auf der Ankerwelle das Auslangen findet, in ihrer Konstruktion einfach ist und es ermöglicht, auch höhere Spannungen als bei den bekannten Maschinen üblich zu liefern. Dieses Ziel wird erfindungsgemäß dadurch erreicht, daß die einander gegenüberliegenden Polflächen der Statorteile gleichpolig magnetisiert bzw. magnetisierbar sind und der scheibenförmige Anker aus zwei parallel liegenden, durch einen Luftspalt oder eine nichtmagnetische Zwischenlage getrennte Scheiben besteht, die mit wenigstens einer gemeinsamen, durchlaufenden Wicklung versehen sind, deren Windungen im Achsialschnitt einen achtförmigen Verlauf aufweisen oder zwei in Radialrichtung hintereinander angeordnete Teilwicklungen vorgesehen sind, die entweder entgegengesetzt gewickelt oder elektrisch entgegengesetzt zusammengeschaltet sind, und die Enden der Wicklungsanordnung in an sich bekannter Weise zu auf der Ankerwelle montierten Schleifringen herausgeführt sind.

Ein Vorteil dieser Anordnung ist zunächst darin zu sehen, daß nur zwei Schleifringe üblicher Bauart verwendet werden können, im Gegensatz zu den bekannten Unipolarmaschinen, die meist eine Sonderkonstruktion für die Schleifringe verlangen. Ein weiterer Vorteil liegt in der Zweiteilung der Ankerscheibe, bei der beide Teile mit einer gemeinsamen Wicklung versehen sind. Durch diese Maßnahme wird nämlich der Kraftlinienweg jeweils nur über einen Luftspalt geführt, wodurch der Wirkungsgrad des Erregerfeldes infolge geringerer Verluste höher ist als bei einer Maschine, bei der die Kraftlinien des Feldes zwei Luftspalte überbrücken müssen. Die Zweiteilung des Ankers ermöglicht es auch, den Spalt zwischen den beiden Scheiben zur Kühlung des Ankers heranzuziehen. Dies ist insoferne von Bedeutung, weil dadurch die Wicklungstemperatur herabgesetzt werden kann und damit auch die Verluste durch den Ohmschen Widerstand des Leitungsmaterials, der bekanntlich mit steigender Temperatur zunimmt.

Bei einem bevorzugten Ausführungsbeispiel sind die scheibenförmigen Ankerteile auf einer Kreisbahn mit angenähert dem halben Ankerradius mit Bohrungen oder sonstigen Durchbrechungen versehen, die von Wicklungsteilen durch-

0022129

setzt sind und insbesondere bei der achtförmigen Ausbildung der Wicklung die sich kreuzenden Windungsteile enthalten. Durch diese Konstruktion wird die Kühlung der Ankerwicklung verbessert. Bei einem anderen Ausführungsbeispiel ist vorgesehen, daß jeder scheibenförmige Ankerteil aus zwei ineinander gelegten Kreisringen aus Eisen oder Eisenblechen besteht, von denen jeder nach Art eines Ringkernes bewikkelt ist, und die Wicklungen entweder gegensinnig aufgebracht oder bei gleichem Wicklungssinn elektrisch entgegengesetzt zusammengeschaltet sind. Eine solche Konstruktion des Ankers ist für große Maschinen gut geeignet, da sich bei größeren Abmessungen Toroidwicklungen relativ einfach maschinell herstellen lassen.

Es sei noch darauf hingewiesen, daß wegen der Aufteilung des Ankers in zwei parallel liegende Scheiben gegenüberliegende Statorteile dieselbe Polarität aufweisen können, so daß es infolge der magnetischen Abstoßung gleichnamiger Pole zu keiner Überlappung der Felder im Anker kommen kann.

Es ist selbstverständlich, daß die erfindungsgemäße Maschine nicht nur als Generator, sondern auch als Motor arbeiten kann. Im letzteren Falle kann sie auch an ein Wechselstromnetz angeschlossen werden, was aber voraussetzt, daß der Eisenkörper der Maschine aus lammelierten und voneinander isolierten Blechen zusammengesetzt ist, damit die Wirbelstrom- und Hystereseverluste, die normalerweise bei einer mit Gleichstrom betriebenen Maschine bzw. einer Gleichstrom liefernden Unipolarmaschine nicht auftreten, gering gehalten werden können. Schließlich wäre es denkbar, die Maschine gemäß der Erfindung auch als Wechselstromgenerator zu verwenden, was dann möglich ist, wenn die Erregerwicklung mit Wechselstrom gespeist wird und der Eisenkörper, wie bei mit Wechselstrom betriebenem Motor, aus lammelierten Blechen besteht.

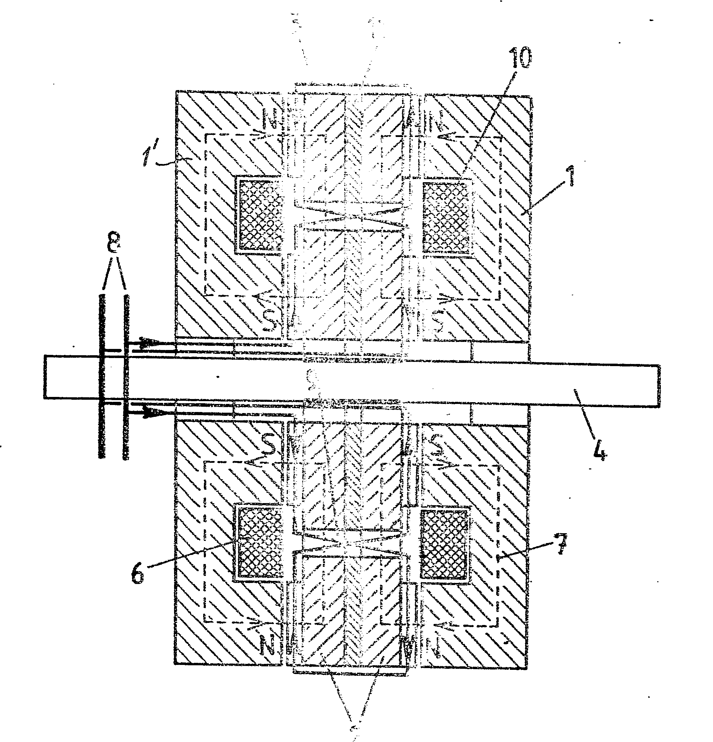

Weitere Einzelheiten der Erfindung können der folgenden Beschreibung an Hand der Zeichnung entnommen werden, die ein bevorzugtes Ausführungsbeispiel schematisch in einem Achsialschnitt darstellt.

Wie die Zeichnung zeigt, ist ein aus zwei scheibenförmigen Teilen 2 bestehender Anker auf einer Welle 4 aufgezogen. Die beiden scheibenförmigen Ankerteile 2 schließen bei dem dargestellten Ausführungsbeispiel einen Luftspalt ein, der hier mit einem nichtmagnetischen Material 11 ausgefüllt ist. Beiderseits des Ankers 2-2 sind scheibenförmige Statorteile 1,1' angeordnet. Auf der jeweils dem Anker zugewendeten Seite sind sie, ungefähr im Bereich des halben Ankerradius, mit einer ringförmigen Nut 10 versehen, die konzentrisch zur Welle 4 verläuft. Jede der beiden Nuten 10 enthält eine Ringwicklung, die, wenn stromdurchflossen, ein über die gegenüberliegende Ankerscheibe 2 verlaufendes magnetisches Feld erzeugt, von dem vier Kraftlinien in idealisierter Darstellung strichliert in der Zeichnung eingetragen sind. Demnach wird in jedem Luftspalt zwischen Anker 2-2 und den Statorteilen 1, 1' ein magnetisches Feld aufgebaut, dessen Kraftlinien senkrecht zu den Scheibenflächen des Ankers 2-2 und der Statorteile 1,1' stehen. In diesem Feld können sich die radial verlaufenden Teile der Wicklung 3 bewegen und schneiden dabei die Kraftlinien dieses Feldes, wenn beispielsweise der Anker 2-2 in Rotation versetzt wird. Da sich bei Stromdurchfluß durch die Wicklung 6 die beiden Bereiche der Statorteile 1,1' beiderseits der Nut 10 entgegengesetzt polarisieren, muß dafür Sorge getragen werden, daß der Strom in den radial verlaufenden Teilen der Wicklung 3 dementsprechend, d.h. im Bereich des einen Polschuhes entgegengesetzt zu dem im Bereich des anderen Polschuhes eines Statorteiles 1 oder 1' fließt. Dies läßt sich auf verschiedene Art erreichen. Beim dargestellten Ausführungsbeispiel ist eine achterförmige Wicklung vorgesehen, die beide Ankerteile 2 erfaßt. Die Kreuzung der Achterschleife liegt etwa in der halben Höhe des Ankerradius, weshalb der Anker 2-2 in diesem Bereich Durchbrechungen oder Bohrungen 9 aufweist, die die sich kreuzenden Teile der Wicklung 3 aufnehmen.

An Stelle der einteiligen, achterförmige Windungen aufweisenden Wicklung 3 können auch mehrteilige Wicklungen verwendet werden. Diese sind insbesondere dann zweckmäßig, wenn jeder Ankerteil 2 aus zwei ineinanderliegenden kreisringförmigen Ankerelementen gebildet wird, von denen jeder nach Art eines Ringkernes bewickelt ist. Die Dimensionen der Ringe sind so zu wählen, daß sie sich, mit den Wicklungen versehen, noch ineinanderlegen lassen. Die Zusammenschaltung der Teilwicklungen hängt dann vom Wickelsinn jeder einzelnen Wicklung ab. Bei gleichem Wicklungssinn müssen die Teilwicklungen elektrisch entgegengesetzt, bei entgegengesetztem Wicklungssinne hingegen elektrisch gleichsinnig zusammengeschaltet werden.

Soll die Maschine als Generator arbeiten, wird über einen nicht dargestellten Antrieb die Welle 4 und damit der Anker 2-2 in Rotation versetzt. Die radial verlaufenden Wicklungsteile der Ankerwicklung 3 schneiden die zur Wicklungsrichtung senkrecht stehenden Kraftlinien, so daß in der Wicklung 3 eine EMK induziert wird, die einen Stromfluß über an die Schleifringe 8 angeschlossene Verbraucher hervorruft. Da der erzeugte Strom seine Richtung nicht ändert, ist ein Kollektor nicht erforderlich. Es tritt in den Eisenteilen der Maschine auch keine Ummagnetisierung auf, so daß diese nicht aus Eisenblechen zusammengesetzt werden müssen. Eine Lamellierung ist nur dann notwendig, wenn die Maschine als Motor arbeiten soll und aus einem Wechselstromnetz gespeist wird. In diesem Falle kommt die Konstruktion der Maschine besonders vorteilhaft zum Tragen, da sowohl für die Statorteile 1, 1' als auch für die beiden Ankerscheiben 2 einfache, ausschließlich kreisförmig begrenzte Stanzformen erforderlich sind.

Für die einwandfreie Funktion der Maschine ist es wesentlich, daß die gegenüberliegenden Bereiche der beiden Sta-

torteile 1,1', die Polschuhen entsprechen, zwischen denen sich die beiden Ankerteile 2 befinden, gleiche Polarität aufweisen, denn nur dann hat das Drehmoment, das auf den Anker einwirkt, dieselbe Drehrichtung, wenn die Maschine als Motor laufen soll.

Wie bei jeder anderen Maschine kann die Felderregung auch mittels eines Dauermagneten hervorgerufen werden. An der Form der Maschine ändert sich nichts, es entfällt lediglich in jedem Statorteil 1,1' die Erregerwicklung 6, wenn diese Teile aus dauermagnetischem Werkstoff hergestellt und entsprechend magnetisiert werden.

Soferne jedoch weichmagnetisches Material für die Eisenkörper der Maschine verwendet wird und Erregerspulen 6 vorhanden sind, können Anker- und Feldwicklungen so wie bei den bekannten Maschinen zusammengeschaltet werden, so daß sich sowohl die Charakteristik einer Reihenschlußmaschine als auch die einer Nebenschlußmaschine erzielen läßt. Gegebenenfalls ist auch eine Reihen-Nebenschluß-Kombination möglich, wenn eine besondere Charakteristik der Maschine angestrebt wird.

Schließlich sei noch vermerkt, daß sich der scheibenförmige Anker nicht unbedingt aus zwei Ankerscheiben 2 zusammensetzen muß, sondern auch einstückig ausgeführt sein kann. Dies ist jedoch nur dann möglich, wenn sichergestellt ist, daß die von den beiden Statorteilen 1,1' ausgehenden Felder gleich groß sind und nicht ein Feld in das andere übergreift.

- 7 -

0022129

Patentansprüche:

1. Unipolarmaschine mit einem scheibenförmigen Anker, der unter Bildung beiderseitiger Luftspalte zwischen scheibenförmigen Statorteilen angeordnet ist, die ankerseitig je eine ringförmige Ausnehmung aufweisen, in der gegebenenfalls je eine ringförmige Erregerwicklung untergebracht ist, dadurch gekennzeichnet, daß die einander gegenüberliegenden Polflächen der Statorteile (1,1') gleichpolig magnetisierbar bzw. gleichpolig magnetisiert sind und der scheibenförmige Anker aus zwei parallel liegenden, durch einen Luftspalt oder eine nichtmagnetische Zwischenlage getrennte Scheiben (2) besteht, die mit wenigstens einer gemeinsamen, durchlaufenden Wicklung (3) versehen sind, deren Windungen im Achsialschnitt einen achtförmigen Verlauf aufweisen oder zwei in Radialrichtung hintereinander angeordnete Teilwicklungen vorgesehen sind, die entweder entgegengesetzt gewickelt oder elektrisch entgegengesetzt zusammengeschaltet sind, und die Enden der Wicklungsanordnung in an sich bekannter Weise zu auf der Ankerwelle montierten Schleifringen herausgeführt sind.

2. Unipolarmaschine nach Anspruch 1, dadurch gekennzeichnet, daß die scheibenförmigen Ankerteile (2) auf einer Kreisbahn mit angenähert dem halben Ankerradius Bohrungen (9) oder sonstige Durchbrechungen aufweisen, die von Wicklungsteilen durchsetzt sind, insbesondere bei der achtförmigen Ausbildung der Wicklung (3) die sich kreuzenden Windungsteile enthalten.

3. Unipolarmaschine nach Anspruch 1 oder Anspruch 2, dadurch gekennzeichnet, daß jeder scheibenförmige Ankerteil (2) aus zwei ineinandergelegten Kreisringen aus Eisen oder Eisenblechen besteht, von denen jeder nach Art eines Ringkernes bewickelt ist, und die Wicklungen entweder gegensinnig aufgebracht oder bei gleichem Wicklungssinne elektrisch entgegengesetzt zusammengeschaltet sind.

0022129

**Europäisches Patentamt**

# EUROPÄISCHER RECHERCHENBERICHT

Nummer der Anmeldung

EP 80 89 0070.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 554 822 (BARRELLIER) <br> * Seite 1, Zeile 16 und folgende * <br> -- | 1,2 |
| | CH - A - 2 355 (R. SCHORCH) <br> * gesamte Schrift * <br> -- | 1 |
| | US - A - 3 205 384 (A. SEARS) <br> * Spalte 2, Zeilen 23 bis 39 * <br> -- | 1 |
| A | CH - A - 86 918 (O. LI GOTTI) <br> * Fig. 10 und 11 * <br> ---- | |

**KLASSIFIKATION DER ANMELDUNG (Int.Cl.3)**

H 02 K 31/00

**RECHERCHIERTE SACHGEBIETE (Int. Cl.3)**

H 02 K 31/00
H 02 K 31/02
H 02 K 31/04
H 02 K 49/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 03-10-1980 | GESSNER |

EPA form 1503.1  06.78